# EUROPÄISCHE PATENTSCHRIFT

(11) **EP 0 815 365 B1**
(45) Veröffentlichungstag und Bekanntmachung des Hinweises auf die Patenterteilung: **23.12.1998**
(21) Anmeldenummer: 96907507.6
(22) Anmeldetag: 20.03.1996
(51) Int. Cl.: F16C 39/06

(54) **MAGNETISCH GELAGERTES VIBRATIONSGEDÄMPFTES SCHWUNGRAD**
MAGNETICALLY MOUNTED OSCILLATION-DAMPED FLYWHEEL
VOLANT D'INERTIE A PALIERS MAGNETIQUES ET A VIBRATIONS AMORTIES

(30) Priorität: 21.03.1995 DE 19509799
(43) Veröffentlichungstag der Anmeldung: 07.01.1998
(73) Patentinhaber: TELDIX GmbH, 69123 Heidelberg (DE)
(72) Erfinder: BICHLER, Udo, D-69126 Heidelberg (DE); ECKARDT, Thomas, D-69123 Heidelberg (DE)
(74) Vertreter: Müller, Frithjof E., Dipl.-Ing.
(86) Internationale Anmeldenummer: EP9601210
(87) Internationale Veröffentlichungsnummer: WO9629522

(56) Entgegenhaltungen:
- EP-A- 0 130 541
- EP-A- 0 191 225
- DE-A- 3 205 712

## Beschreibung

Die Erfindung betrifft ein magnetisch gelagertes vibrationsgedämpftes Schwungrad mit großer radialer Ausdehnung im Vergleich zur axialen Ausdehnung.

### Stand der Technik

Aus der DE-A-3 205 712 ist ein magnetisch gelagertes Schwungrad nach dem Oberbegriff des Anspruchs 1 bekannt.

Aus der DE 32 43 641 A1 ist ein magnetisch gelagertes lagestabilisierbares Schwungrad mit großer radialer Ausdehnung im Vergleich zur axialen Ausdehnung bekannt. Zum Drehantrieb des Schwungrades ist dort ein Krafterzeugungssystem vorgesehen, das nach dem elektrodynamischen Prinzip arbeitet. Zum Motorantrieb weist der Rotor einen Spalt an der Unterseite des Rades auf, in das die Motorwicklung, die auf einem Stator befestigt ist, eintaucht. Weitere Krafterzeugungssysteme zur axialen Verschiebung und zur radialen Verschiebung der Drehachse des Rades sowie zur Erzeugung von Kippmomenten sind ebenfalls vorgesehen. Die Krafterzeugungssysteme sind mit entsprechenden Sensoren über ein Regelsystem gekoppelt, so daß eine Lagestabilisierung in insgesamt fünf Freiheitsgraden möglich ist. Die DE 38 19 205 A1 offenbart ein Schwungrad, das mittels eines Krafterzeugungssystems nach dem elektrodynamischen Prinzip am Außenumfang des Rotors radial antreibbar ist. Für die Erzeugung von Kippmomenten sind ebenfalls am Außenumfang des Schwungrades Krafterzeugungssysteme nach dem elektrodynamischen Prinzip vorgesehen. Dazu ist am Außenumfang des Rotors eine Ringnut vorgesehen, die zwei übereinander angeordnete entgegengesetzt magnetisierte Permanentmagnete aufnimmt. In diese Ringnut tauchen vier am Stator befestigte Spulen ein, die vom Magnetfluß des Permanentmagneten durchsetzt werden. Zur Erzeugung von Kippmomenten und Axialkräften sind die Ströme in diesen vier Spulen in ihrer Richtung umschaltbar. Die zur Lagestabilisierung notwendigen Sensoren sind über ein Regelsystem mit den entsprechenden Krafterzeugungssystemen gekoppelt.

Die EP 0 130 541 A1 beschreibt ein elektromagnetisch gelagertes Schwungrad, das einen Stator und einen Rotor enthält. Der Rotor wird durch ein Magnetlager gehalten. Das Magnetlager enthält zwei einander gegenüberstehende aus einem magnetischen Material bestehende Kreisringscheiben, die einen Ringspalt bilden. Die Vorrichtung enthält weiter eine Mehrzahl von Elektromagneten, die die magnetische Flußdichte in einer Mehrzahl verschiedener Positionen entlang des Umfangs des Ringspalts verändern können. Das Magnetlager wirkt direkt auf die am äußeren Umfang des Schwungrades angeordnete Schwungmasse. Ein zum Drehantrieb vorgesehener bürstenloser Motor ist außen an der Nabe des Schwungrades montiert.

### Definition und Vorteile der Erfindung

Aufgabe ist es, das magnetisch gelagerte Schwungrad kompakt zu gestalten. Erfindungs gemäß wird ein magnetisch gelagertes vibrationsgedämpftes Schwungrad gemäß Anspruch 1 vorgesehen.

Vorteilhafte Weiterbildungen sind in den abhängigen Ansprüchen 2 bis 10 definiert.

Durch die Unterbringung des Krafterzeugungssystems für die radiale Verschiebung als auch der entsprechenden Sensoren im Radnabenbereich ergibt sich eine gute Unterdrückung von Störschwingungen, insbesondere wenn auch das Krafterzeugungssystem für den Drehantrieb in der Radnabe des Schwungrades untergebracht ist. Störschwingungen sowie deren harmonische lassen sich wirksam unterdrücken. Auch können derart hervorgerufene Resonanzerscheinungen nicht zu Störungen beim Betrieb der Sensoren führen. Besonders vorteilhaft ist es, die Krafterzeugungssysteme für die axiale Verschiebung bzw. zur Erzeugung von Kippmomenten sowie die dazugehörigen Sensoren am Außenumfang des Schwungrades unterzubringen.

Im Gegensatz zu elektromagnetischen Krafterzeugungssystemen, bei denen mechanische Schwankungen in Kräfte umgesetzt werden, erzeugen die bei der Erfindung eingesetzten Krafterzeugungssysteme nach dem elektrodynamischen Prinzip weniger unerwünschte Vibrationen. Die Verwendung elektrodynamischer Krafterzeugungssysteme führt zu einer vorteilhaften Masseverteilung zwischen Rotor und Stator.

Durch die Verlagerung des Drehantriebs in die Radnabe ist der Schwenkbereich des Schwungrades auch bei Verwendung relativ kleiner Motorspulen ausreichend groß.

### Zeichnungen

Anhand der Zeichnungen wird ein Ausführungsbeispiei der Erfindung näher beschrieben.
**Figur 1a** zeigt einen Querschnitt durch das Schwungrad mit Magnetlagerung nach der Erfindung,
**Figur 1b** ist eine Ansicht des Radnabenbereichs mit Sensoren für Translationsbewegungen und
**Figur 2** eine Ansicht eines Sensorsystems zur Erfassung von Translationsbewegungen.

### Beschreibung der Erfindung

Das in der Zeichnung dargestellte Schwungrad besteht aus einer Radnabe, die als im wesentlichen geschlossener scheibenartiger Hohlkörper H ausgebildet ist, Speichen und einem äußeren Radkranz RK, der mit einer Ringnut N versehen ist und die Hauptmasse des Schwungrades bildet. Der ebenfalls scheibenartig ausgebildete Stator S ist an einer Zentralachse befestigt, die am Gehäuse montiert ist. Die Drehachsen von Rotor R und Stator S sind identisch. Die Spulen w1 des Krafterzeugungssystems M1 für den Drehantrieb des Schwungrades befinden sich auf dem in der Radnabe angeordneten Stator S, und zwar vorteilhafterweise am Außenumfang der Statorscheibe S in einer Ebene senkrecht zur Scheibenausdehnung. Die dazugehörigen Permanentmagnete P1 sind an der Innenseite des Hohlkörpers H an jeder Wand angebracht, die im wesentlichen parallel zur Radachse verläuft. Die Permanentmagnete weisen abwechselnde Pole auf. Das Motorsystem besteht aus einem eisenlosen DC-Motor mit elektronischer Kommutierung. Bei niederigen Geschwindigkeiten erhält die Antriebselektronik die Rotorposition von einem einfachen Wirbelstromsensorsystem zum Kommutieren. Bei höherer Geschwindigkeit (über 200 rpm) wird die Kommutierung von der Spannung - Gegen EMK - in den Motorwicklungen abgeleitet. Dies gewährleistet eine genaue Kommutierung auch beim Schwenken des Rotors.

Das Krafterzeugungssystem M2 für die radiale Verschiebung der Drehachse des Schwungrades ist ebenfalls im Innenraum der Radnabe angeordnet. Es arbeitet ebenfalls nach dem elektrodynamischen Prinzip. Auf dem scheibenförmigen Stator S sind zwei nebeneinander liegende ringförmige Wicklungen w21 und w22 angeordnet. Die dazugehörigen ringförmig ausgebildeten Permanentmagnete P2, P3 befinden sich an den Scheibeninnenseiten des Hohlkörpers H jeweils im Bereich unter bzw. über den im Stator S befindlichen Wicklungen w21, w22. Der toroidförmige magnetische Fluß ist schematisch dargestellt. Es entsteht eine Kraftwirkung in Radialrichtung (x-Richtung).

Das axiale Krafterzeugungssystem M3 für die axiale Verschiebung arbeitet ebenfalls nach dem elektrodynamischen Prinzip. Es befindet sich am äußeren Radumfang des Rotors R in einer in axialer Richtung (y-Richtung) verlaufenden Ringnut N im äußeren Radkranz. An der nach außen weisenden Wand der Ringnut N befinden sich zwei in y-Richtung übereinander angeordnete schleifenförmige Permanentmagnete mit gleichgerichteten Polen. Die Permanentmagnete liefern ein gleichmäßiges kreisförmiges Magnetfeld für die axialen und Kippmonent-Krafterzeugungssysteme. Die Spulen w31 und w32 für das Krafterzeugungssystem M3 sind als übereinander liegende Ringwicklungen auf einem weiteren Stator S1 angeordnet, der über ein Gehäuse starr mit dem Stator S verbunden ist. Es entsteht der schematisch dargestellte toroidförmige magnetische Fluß, der eine Kraftwirkung in y-Richtung erzeugt.

Zur Erzeugung von Kippmomenten ist ein Krafterzeugungssystem M4 vorgesehen (nicht dargestellt) mit vier in der Nut N befindlichen in Epoxidharz eingebetteten Wicklungen, die sich jeweils in einem Kreissektor von 90° erstrecken. Nähere Einzelheiten zur geometrischen Anordnung dieser Wicklungen enthält die DE 32 40 809 C2, insbesondere Figur 6b. Kippmomente werden erzeugt durch Erregung jeweils gegenüberliegender Wicklungen mit gegenphasigen Strömen.

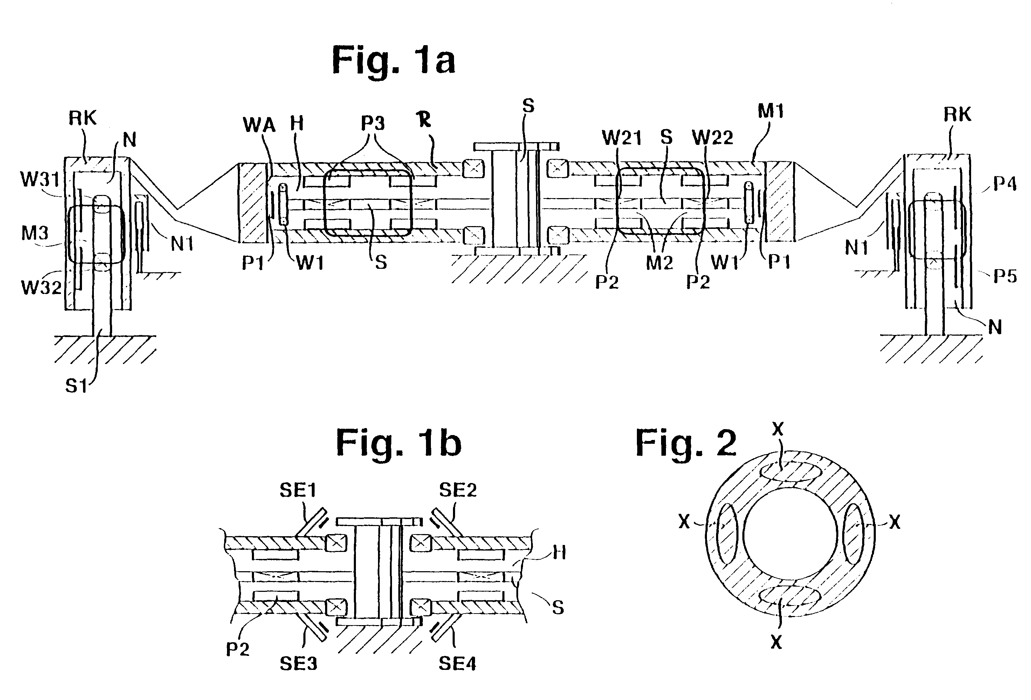

Sensoren SE1 ... SE4 - nur in Figur 1b dargestellt - zur Erfassung der Bewegungen des Schwungrades in den erwähnten Freiheitsgraden sind über ein Regelsystem RS (nicht dargestellt) zur Lagestabilisierung mit den entsprechenden Krafterzeugungssystemen M1 bis M4 gekoppelt. Einzelheiten solcher Regelsysteme zur Lagestabilisierung sind beispielsweise der DE 32 40 809 C2 oder der DE 38 19 205 A1 entnehmbar.

Insgesamt sind drei Sensorsysteme vorgesehen: das Kippsensorsystem besteht aus zwei Kippsensoren mit jeweils zwei Spulensystemen. Die Sensorspulen sind am Gehäuse befestigt, und zwar zueinander gegenüberliegend in der Nut N am äußeren Umfang des Rotorkranzes. Die Differenz zwischen den entsprechenden Sensorspulen liefert die Kipposition. Die Anbringung der Kippsensoren in der Nähe des Krafterzeugungssystems für das Kippmoment M4 führt zu einer durch Störeinflüsse wenig beeinflußten Regelung.

Das Translationssensorsystem besteht aus vier Sensorspulen über der Radnabe und vier Sensorspulen unterhalb der Radnabe - SE1 ... SE4 (Figuren 1b und 2). Die Referenzflächen der Sensoren SE1 ... SE4 bestehen aus Zahnkränzen an der Ober- und/oder Unterseite des Randnabenrotorgehäuses H. Die Sensorspulen nach Figur 2 sind starr am Stator S befestigt, damit die radiale Abstandsdifferenz zwischen Stator S und Rotor R ermittelt werden kann. Die Anordnung dieser Sensoren gerade im Radnabenbereich führt zu genaueren Erfassungen der Bewegungen (aktive Störschwingungsunterdrückung) als bei Systemen mit Sensoren am Rotoraußenrand. Die translatorischen Bewegungen sind im Radnabenbereich weniger durch Kippbewegungen gestört.

Durch Auswertung der Spulenausgangssignale können alle translatorischen Freiheitsgrade erfaßt werden.

Die axiale Positionsbestimmung erfolgt durch Vergleich der Spannungen in den Sensoren, die oberhalb und unterhalb des Rotors angebracht sind.

Für die Kommutierung bei geringer Geschwindigkeit sind außerdem statische Sensoren (nicht dargestellt) vorgesehen. Für alle Sensoren wird vorteilhafterweise das Wirbelstrom-Prinzip angewandt, da es einfach aufgebaut werden kann und zuverlässig arbeitet. Es weist eine hohe Bandbreite auf und ist ausreichend linear, wenn die elektrischen und mechanischen Eigenschaften geeignet gewählt sind. Alle Sensoren arbeiten nach dem Differenzprinzip, um Drifteffekte zu vermeiden.

Der Radkranz des Rotors weist eine weitere innenseitig gelegene Ringnut N1 auf, die aus Aluminium besteht und Teil des Kippsensorsystems ist. Die dazugehörigen Spulen sind an Stator S1 montiert und ragen in die Ringnut N1.

Zwischen der Achse des Stators S und der Radnabe des Rotors R sind jeweils zwei Kugellagerringe vorgesehen, die bei Ausfall der Magnetlager, das heißt der Stromversorgung, arbeiten.

Das vorgestellte Schwungrad besitzt einen Schwenkbereich von +/-4°. Daher ist es ideal geeignet als gyroskopische Stelleinrichtung für Kommunikationssatelliten. Das heißt, der Rotor kann gegenüber dem Gehäuse in Kippachsen geschwenkt werden, die nicht mit der Drehachse identisch sind. Das Kippen des Rotors kann außerdem zum Speichern eines transversalen Moments ausgenutzt werden, um externe Störmomente zu kompensieren oder zur Veränderung der Bewegung von rotierenden Gebilden an Bord des Satelliten, wie zum Beispiel zur Antennenausrichtung.

Im Falle eines Ausfalls der Satelliten-Busspannung läßt sich der Motor automatisch in den Generatorbetrieb umschalten, um die Energie für die Eigenversorgung sowie eine stabile Lagerung bis hinunter zu 1500 rpm aufzubringen. Darunter wird die elektromotorische Kraft EMK zu gering, um genügend Energie für die Versorgung der Elektronik zu liefern.

## Patentansprüche

1. Magnetisch gelagertes vibrationsgedämpftes Schwungrad mit großer radialer Ausdehnung im Vergleich zur axialen Ausdehnung umfassend:
- einen Schwungrad-Rotor (R) mit einer Radnabe ;
- einen Stator;
- (ein) Krafterzeugungssystem/systeme (M1) für den Drehantrieb des Schwungrades, das/die im Bereich der Radnabe angeordnet ist/sind;
- (ein) Krafterzeugungssystem/systeme (M2) für die radiale Verschiebung des Schwungrades, das heißt insbesondere die Verschiebung seiner Drehachse, das/die im Innern der Radnabe angeordnet ist/sind, und
- Sensoren (SE1 ... SE4) zur Erfassung der radialen Verschiebung des Schwungrades, die auf an der Radnabe angebrachte Referenzflächen ansprechen,
**dadurch gekennzeichnet,** daß
- die Radnabe aus einem scheibenartigen im wesentlichen geschlossenen Hohlkörper (H) als Teil des Schwungrad-Rotors (R) besteht, welcher das/die Krafterzeugungssystem/systeme (M1) für den Drehantrieb des Schwungrades in seinem Innern aufnimmt:
- das/die Krafterzeugungssystem/systeme (M1) für den Drehantrieb (einen) Permanentmagnet/magnete (P1) aufweist/aufweisen, der/die an der Innenseite des Hohlkörpers (H) an jener Wand (WA) angebracht ist/sind, die im wesentlichen parallel zur Radachse verläuft; und
- der Stator (S) scheibenartig ausgebildet ist und an seinem Außenumfang die Spule/Spulen (w1) des/der Krafterzeugungssystem/systeme (M1) für den Drehantrieb trägt.

2. Schwungrad nach Anspruch 1, **dadurch gekennzeichnet** daß das Krafterzeugungssystem/systeme (M2) für die radiale Verschiebung vom elektrodynamischen Prinzip ist/sind.

3. Schwungrad nach Anspruch 1 oder 2, **dadurch gekennzeichnet**, daß der/die Permanentmagnet/magnete (P1) des/der Krafterzeugungssystems/systeme (M1) für den Drehantrieb im Bereich der dazugehörigen Spule/Spulen (w1) angeordnet ist/sind.

4. Schwungrad nach einem der Ansprüche 1 bis 3, **daduch gekennzeichnet**, daß die Spulen (w2) des Krafterzeugungssystems (M2) für die radiale Verschiebung als nebeneinanderliegende scheibenartige Wicklungen (w21, w22) im Stator (S) ausgebildet sind.

5. Schwungrad nach Anspruch 4, **dadurch gekennzeichnet,** daß die Permanentmagnete (P2, P3) für das Krafterzeugungssystem (M2) für die radiale Verschiebung an den Scheibeninnenseiten des Hohlkörpers (H) jeweils im Bereich über bzw. unter den im Stator befindlichen Wicklungen (w21, w22) angeordnet sind.

6. Schwungrad nach einem der Ansprüche 1 bis 5, **dadurch gekennzeichnet,** daß ein Krafterzeugungssystem (M3) nach dem elektrodynamischen Prinzip für die axiale Verschiebung am äußeren Radumfang des Rotors (R) vorgesehen ist.

7. Schwungrad nach einem der Ansprüche 1 bis 6, **dadurch gekennzeichnet,** daß am äußeren Radumfang des Rotors (R) eine in axialer Richtung verlaufende Ringnut (N) vorgesehen ist, daß in dieser Ringnut (N) zwei übereinander angeordnete Permanentmagente (P4, P5) an mindestens einer der Nutwände vorgesehen sind und daß zu diesen Permanentmagneten (P4, P5) gehörige Spulen (w31, w32) als Ringwicklungen auf einem weiteren Stator (S1) im Bereich der Permanentmagnete (P4, P5) übereinander angeordnet sind.

8. Schwungrad nach einem der Ansprüche 1 bis 7, **dadurch gekennzeichnet,** daß ein Krafterzeugungssystem (M4) nach dem elektrodynamischen Prinzip für die Erzeugung von Kippbewegungen im äußeren Randbereich des Rotors (R) vorgesehen ist, welches paarweise gegenüberliegende sektorförmige Spulen auf einem/dem weiteren Stator (S1) aufweist, wobei die jeweils gegenüberliegenden Spulen mit zueinander gegensinnigen Strömen beaufschlagbar sind.

9. Schwungrad nach einem der Ansprüche 1 bis 8, **dadurch gekennzeichnet,** daß die Sensoren (SE1 ... SE4) über ein Regelsystem (RS) zur Lagestabilisierung mit den entsprechenden Krafterzeugungssystemen (M1 ... M4) gekoppelt sind.

10. Schwungrad nach einem der Ansprüche 1 bis 9, **dadurch gekennzeichnet,** daß die Referenzflächen der Sensoren (SE1 ... SE4) für die Radialbewegung des Schwungrades aus Zahnkränzen an der Ober- und/oder Unterseite des Radnabengehäuses bestehen.

## Claims

1. A magnetically mounted, vibration-damped flywheel having a large radial extent relative to the axial extent, comprising:
- a flywheel rotor (R) with a wheel hub;
- a stator;
- (a) power generation system/systems (M1) for the rotary drive of the flywheel, which is/are arranged in the region of the wheel hub;
- (a) power generation system/systems (M2) for the radial displacement of the flywheel, i.e. in particular the displacement of its rotation axis, which is/are arranged inside the wheel hub, and
- sensors (SE1 ... SE4) for detecting the radial displacement of the flywheel, which respond to reference surfaces provided on the wheel hub,
characterised in that
- the wheel hub comprises a disc-type, substantially closed hollow body (H) being part of the flywheel rotor (R) and accommodating the power generation system/systems (M1) for the rotary drive of the flywheel in its interior;
- the power generation system/systems (M1) for the rotary drive has/have (a) permanent magnet/magnets (P1) which is/are provided on the inside of the hollow body (H) on the wall (WA) extending substantially parallel to the wheel axis, and
- the stator (S) is formed in the manner of a disc and, on its outer circumference, carries the coil/coils (w1) of the power generation system/systems (M1) for the rotary drive.

2. A flywheel according to claim 1, characterised in that the power generation system/systems (M2) for radial displacement operates/ operate according to the electrodynamic principle.

3. A flywheel according to claim 1 or 2, characterised in that the permanent magnet/magnets (P1) of the power generation system/systems (M1) for the rotary drive is/are arranged in the region of the associated coil/coils (w1).

4. A flywheel according to any one of claims 1 to 3, characterised in that the coils (w2) of the power generation system (M2) for radial displacement are formed as disc-type windings (w21, w22) arranged side by side in the stator (S).

5. A flywheel according to claim 4, characterised in that the permanent magnets (P2, P3) for the power generation system (M2) for radial displacement are arranged on the disc inner surfaces of the hollow body (H) in the region above and below the windings (w21, w22) arranged in the stator.

6. A flywheel according to any one of claims 1 to 5, characterised in that a power generation system (M3) operating according to the electrodynamic principle is provided for axial displacement on the outer wheel circumference of the rotor (R).

7. A flywheel according to any one of claims 1 to 6, characterised in that an annular groove (N), extending in the axial direction, is provided on the outer wheel circumference of the rotor (R), in that two permanent magnets (P4, P5) arranged one above the other are provided in this annular groove (N) on at least one of the groove walls, and in that coils (w31, 32) associated with these permanent magnets (P4, P5) are arranged one above the other as ring windings on a further stator (S1) in the region of the permanent magnets (P4, P5).

8. A flywheel according to any one of claims 1 to 7, characterised in that a power generation system (M4) operating according to the electrodynamic principle is provided for the generation of tilting movements in the outer edge region of the rotor (R) and has segment-type coils arranged opposite one another in pairs on a/the further stator (S1), the respective opposing coils being subjectable to opposing currents.

9. A flywheel according to any one of claims 1 to 8, characterised in that the sensors (SE1 ... SE4) are connected to the corresponding power generation sytems (M1 ... M4) via a control system (RS) for positional stabilisation.

10. A flywheel according to any one of claims 1 to 9, characterised in that the reference surfaces of the sensors (SE1 ... SE4) for the radial movement of the flywheel comprise toothed rings on the upper and/or lower surface of the wheel hub housing.

## Revendications

1. Volant à vibrations amorties, à paliers magnétiques, avec une grande extension radiale par rapport à l'extension axiale, comportant:
- un rotor de volant (R) avec un moyeu de roue;
- un stator;
- un (des) système(s) de production de forces (M1) pour l'entraînement en rotation du volant, qui est (sont) disposé(s) dans la zone du moyeu de roue;
- un (des) système(s) de production de forces (M2) pour le coulissement radial du volant, c'est-à-dire en particulier le coulissement de son axe de rotation, qui est (sont) disposé(s) à l'intérieur du moyeu de roue et
- des capteurs (SE1...SE4) destinés à détecter le coulissement radial du volant, qui réagissent à des surfaces de référence placées sur le moyeu de roue, caractérisé en ce que
- le moyeu de roue est constitué d'un corps creux (H) du type disque, sensiblement fermé, faisant partie du rotor de volant (R), qui loge à l'intérieur le (les) système(s) de production de forces (M1) pour l'entraînement en rotation du volant;
- le (les) système(s) de production de forces (M1) pour l'entraînement en rotation présente(nt) un (des) aimant(s) permanent(s) (P1), qui est (sont) fixé(s) sur le côté intérieur du corps creux (H), sur la paroi (WA) qui s'étend sensiblement parallèlement à l'axe du volant; et
- le stator (S) est du type disque et porte sur son pourtour extérieur la (les) bobine(s) (w1) du (des) système(s) de production de forces (M1) pour l'entraînement en rotation.

2. Volant selon la revendication 1, caractérisé en ce que le (les) système(s) de production de forces (M2) pour le coulissement radial est (sont) de principe électrodynamique.

3. Volant selon la revendication 1 ou 2, caractérisé en ce que le (les) aimant(s) permanent(s) (P1) du (des) système(s) de production de forces (M1) pour l'entraînement en rotation est (sont) disposé(s) dans la zone de la (des) bobine(s) (w1) correspondante(s).

4. Volant selon l'une des revendications 1 à 3, caractérisé en ce que les bobines (w2) du système de production de forces (M2) pour le coulissement radial sont concues en tant qu'enroulements (w21, w22) du type disques, juxtaposés dans le stator (S).

5. Volant selon la revendication 4, caractérisé en ce que les aimants permanents (P2, P3) pour le système de production de forces (M2) pour le coulissement radial sont disposés sur les côtés intérieurs du disque du corps creux (H), chacun dans la zone située au-dessus ou au-dessous des enroulements (w21, w22) se trouvant dans le stator.

6. Volant selon l'une des revendications 1 à 5, caractérisé en ce qu'un système de production de forces (M3) suivant le principe électrodynamique est prévu pour le coulissement axial, sur le pourtour extérieur de la roue du rotor (R).

7. Volant selon l'une des revendications 1 à 6, caractérisé en ce que sur le pourtour extérieur de la roue du rotor (R) est prévue une rainure annulaire (N), s'étendant axialement, en ce que dans cette rainure annulaire (N) sont prévus deux aimants permanents (P4, P5), superposés, sur au moins l'une des parois de rainure et en ce que des bobines (w31, w32), appartenant à ces aimants permanents (P4, P5), sont superposées en tant qu'enroulements annulaires sur un autre stator (S1), dans la zone des aimants permanents (P4, P5).

8. Volant selon l'une des revendications 1 à 7, caractérisé en ce qu'un système de production de forces (M4) suivant le principe électrodynamique est prévu pour la production de mouvements de basculement dans la zone de bordure extérieure du rotor (R), qui comporte des bobines en forme de secteurs, opposées deux par deux, sur un/l'autre stator (S1), les bobines opposées recevant des courants de sens contraire.

9. Volant selon l'une des revendications 1 à 8, caractérisé en ce que les capteurs (SE1...SE4) sont couplés par un système de régulation (RS) pour la stabilisation de la position avec les systèmes de production de forces (M1...M4) correspondants.

10. Volant selon l'une des revendications 1 à 9, caractérisé en ce que les surfaces de référence des capteurs (SE1...SE4) pour le mouvement radial du volant sont constituées de couronnes dentées sur la face supérieure et/ou la face inférieure du boîtier de moyeu de roue.
